# EUROPEAN PATENT SPECIFICATION

(11) **EP 3 820 285 B1**
(45) Date of publication and mention of the grant of the patent: **09.04.2025**
(21) Application number: 19752262.6
(22) Date of filing: 08.07.2019
(51) Int. Cl.: A01K 73/045, B63B 21/66, G01V 1/38

(54) **SPREADING DEVICE**
VERBREITUNGSVORRICHTUNG
DISPOSITIF D'ÉTALEMENT

(30) Priority: 11.07.2018 GB 201811369
(43) Date of publication of application: 19.05.2021
(73) Proprietor: Thyborøn Skibssmedie A/S, 7680 Thyborøn (DK)
(72) Inventor: JOSAFATSSON, Atil Mar, 104 Reykjavik (IS)
(74) Representative: Patrade A/S
(86) International application number: PCT/IB2019/055793
(87) International publication number: WO 2020/012326

(56) References cited:
- WO-A1-2015/055207
- JP-A- S62 224 225
- JP-U- H0 546 273
- JP-U- H0 546 273
- US-A- 4 890 568
- US-A1- 2008 022 913

## Description

The present invention relates to a spreading device or trawl door.

Trawl doors, also known as otter boards, deflectors, paravanes and vanes, hereinafter collectively referred to as "spreading devices", are used at opposite sides of a fishing trawl or opposite sides of seismic system to keep the fishing trawl open or a line of seismic guns and streamers in their correct use position.

Trawl doors are used to open a system of fishing gear. They are set from the vessel into the sea with its fishing gear connected between them. The doors spread out to each side from the vessel and generate a distance so that the gear, namely the fishing trawl, wires and cables herein after referred to as a "system", are in optimal fishing conditions.

A trawl door is connected to a steel wire cable or a synthetic rope leading from the vessel, and the fishing net is connected to the trawl door in the opposite direction with another set of steel wire cables or synthetic ropes.

Trawl doors are generally used in pairs where the trawl door on the right side is called "starboard door" and the trawl door on the left side is called "port door".

Deflectors, paravanes or vanes are used to spread a system of streamers for a seismic survey. They are also used in pairs and are set from the vessel in a similar manner to trawl doors in order to pull the streamers to each side of the vessel. Paravanes are almost without exception, connected to synthetic ropes leading from the vessel and the seismic system, between the streamers and other components are also connected with synthetic ropes.

In essence, trawl doors and paravanes have the same purpose, to spread and hold the components in position therebetween.

Overall in the industry, the method to change the positioning of a trawl door or paravane, its angle of attack or pitch or roll, is both a complex and time consuming process as it is necessary to pull the spreading device to the surface to the vessel or onboard the vessel. Connecting units, shackles, connector or hooks leading to and from the spreading devices are disconnected and re-connected in different positions and the system is set out again into the sea.

It is known to construct a trawl door in such a way that the lateral force which it exerts is adjustable. Our European Patent No EP 2734039 B1, it is described and claimed: "A spreading device (10) for trawl fishing and seismic survey operations, the device comprising:-
- an upper frame (11) defining a top edge of the device;
- a lower frame (12) defining a bottom edge of the device;
- an intermediate frame (13) between the upper and lower frame;
- at least two upper panels (16, 18) connected between the upper frame and intermediate frame, wherein each of the at least two upper panels have a leading edge and a trailing edge;
- at least two lower panels connected between the intermediate frame and the lower frame, wherein each of the at least two lower panels have a leading edge and a trailing edge;
- driving units (25) mounted on (i.) the upper frame and the lower frame; or (ii.) the intermediate frame; or (iii.) the upper frame, the lower frame and the intermediate frame, and adapted to alter the position of at least one of the upper panels (16, 18) and the lower panels, the driving units (25) adapted to be controlled remotely, when the device is in use being towed through the water;
wherein at least one of the at least two upper panels (16, 18) or at least one of the at least two lower panels is adjustable independently to adjust the position of the panels closer to each other or further apart to control water flow through the device between the at least two upper panels from the leading edge to the trailing edge and between the at least two lower panels from the leading edge to the trailing edge."

JP H05 46273 U discloses a spreading device according to the preamble of claim 1. WO 2015/055207 Al and JP S62 224225 A disclose each a spreading device comprising an upper, an intermediate and a lower frame, at least two upper panels, at least two lower panels, one of the upper panels and one of the lower panels being adjustable in its angle of attack with respect to other panels.

The object of the present invention is to provide a manually adjustable spreading device.

The invention is defined in the independent claim. Preferred embodiments are defined in the dependent claims.

Normally one or more upper panels and one or more lower panels are fixed, preferably the aftermost panels in the device, with the other panels being adjustable. There may be only single forward panels or two or more forward panels. In the preferred embodiment there are two forward panels. One only of these may be adjustable, but preferably they both are.

The adjustable panels could be pivoted at trailing edges or intermediate axes between the respective frames. However, in the preferred embodiments they are pivoted substantially at their leading edges.

The manual adjustment means is conveniently provided by sets of apertures aligned at different angles and able to receive pins to set the adjustment. The apertures can be arrayed in the direction of adjustment, i.e. circumferentially with respect to the local direction of adjustment. However, they are preferably arrayed obliquely, whereby finer adjustment is achievable.

It is envisaged that the manual adjustment means can be provided at one or all of the frames, though they are preferably at the intermediate frame. The adjustment means can be provided on the top side of the intermediate frame, preferably however, they can be provided on both the top and bottom side of the intermediate frame.

To provide interconnection of the frames at the leading edges of adjustable panels, fixed members can be provided close to the leading edges. Preferably these are hydrodynamically shaped in cross-section to divide flow past them to respective sides of the panels.

To help understanding of the invention, a specific embodiment thereof will now be described by way of example and with reference to the accompanying drawings, in which:
Figure 1 is an aerial diagram of a fishing vessel towing a system of fishing gear;
Figure 2 is an top cross-sectional diagram of the device showing the hydrofoils in an open position and the direction of the water flow through them;

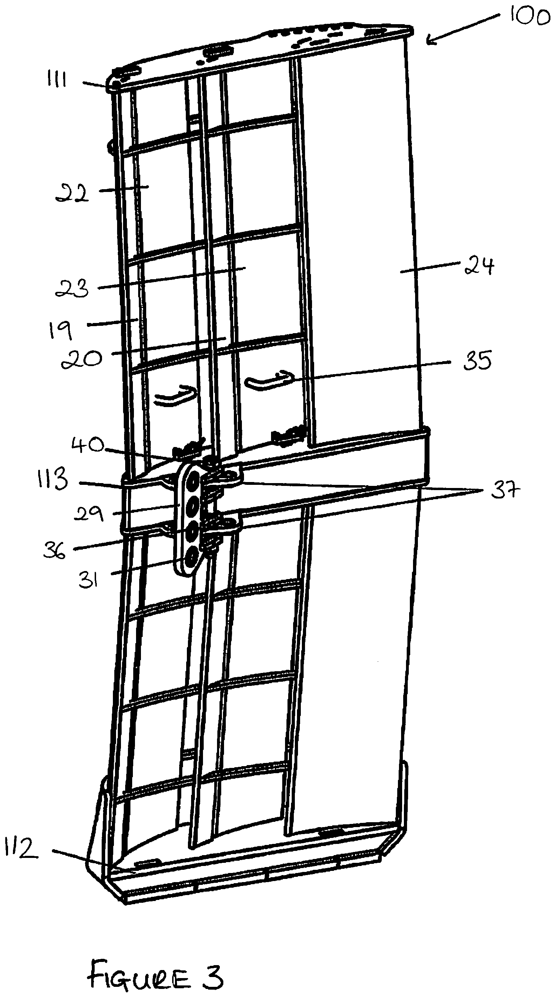

Figure 3 is a perspective diagram of the inner face of the spreading device;
Figure 4 is a perspective diagram of the outer face of the spreading device;

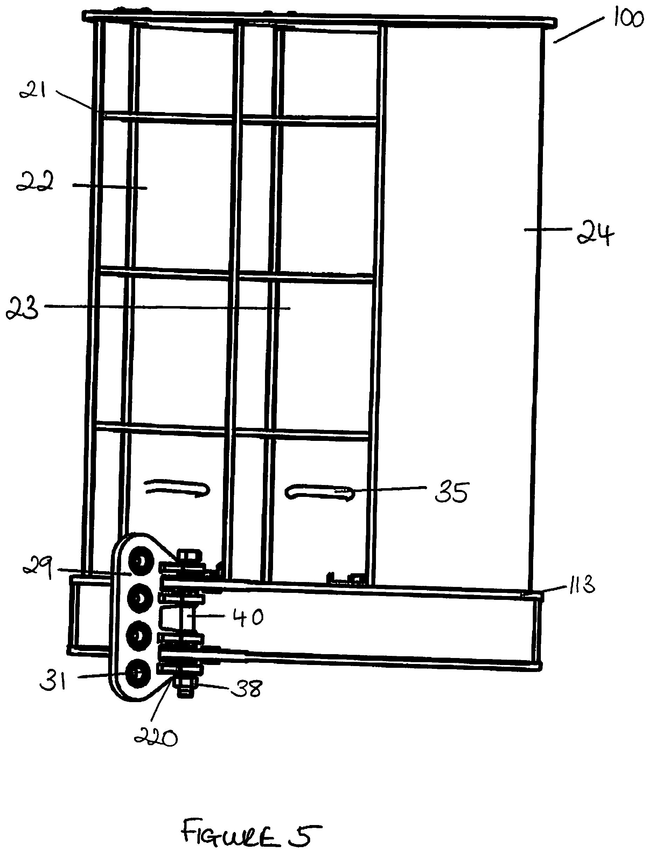

Figure 5 is a front diagram of the inner face of the upper frame of the spreading device;
Figure 6 is a perspective diagram of the adjustment mechanism on the intermediate frame;

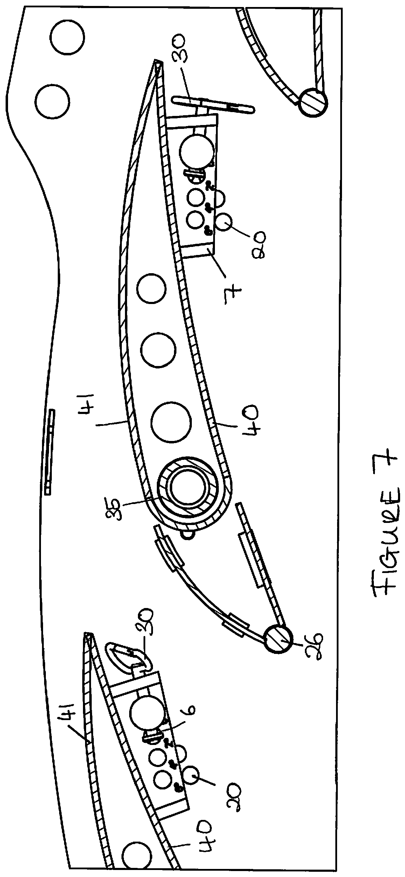

Figure 7 is a top diagram of the adjustment mechanism on the intermediate frame; and

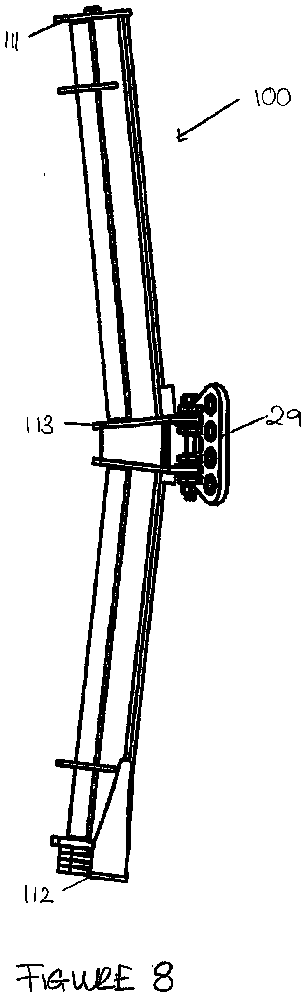

Figure 8 is a side diagram of the spreading device.

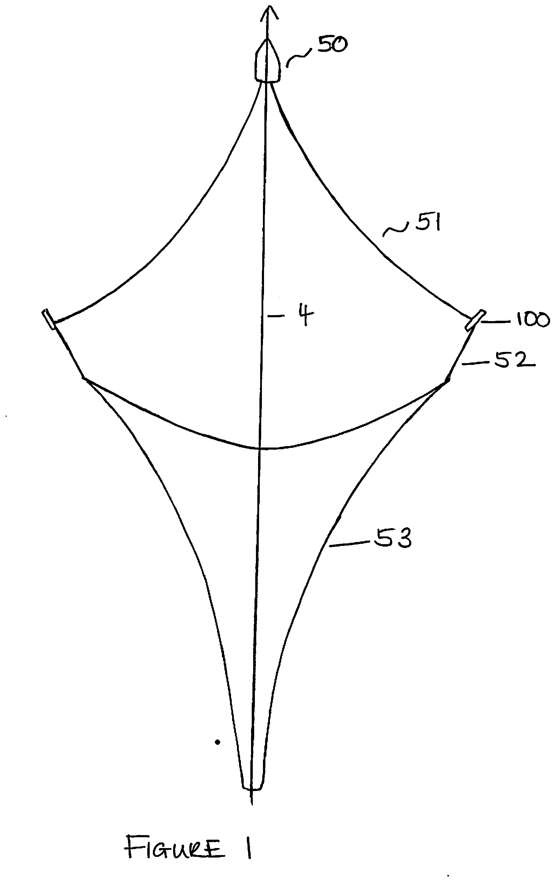

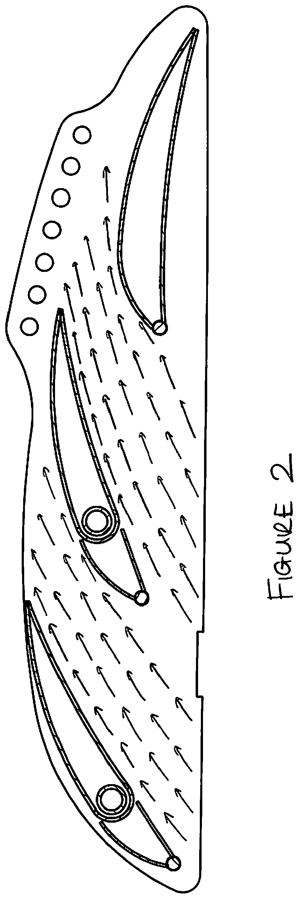

Referring to the drawings, Figures 1 and 2 (Figures 1 and 13a respectively, as taken from our previous application EP 2734039 B1), show an aerial diagram of fishing vessel 50 towing a system of fishing gear comprising a pair of spreading devices 100 connected to the towing cables 51 and bridles 52 from the spreading device to the fishing trawl 53. The drawing shows the towing direction 4 of the fishing vessel and position of the fishing gear.

The spreading device 100 of Figure 2 (13a) comprises a first panel or hydrofoil body 22, second panel or hydrofoil body 23 and third panel 24. The Figures show flow of water between the panels to spread the trawl.

The spreading device 100 of the invention has an upper frame 111 and a lower frame 112, separated by an intermediate frame 113. Between the upper and intermediate frame, there are three panels. The first two panels or hydrofoils 22, 23 are adjustable and have fixed leading edges 25, 26. These extend structurally between the frames, that is the leading edges 25, 26 welded to the upper frame 111 and the intermediate frame 113 and the intermediate frame 113 and the lower frame 110. Third, after panels 24 fixedly interconnect the upper & intermediate and intermediate & lower frames respectively.

Both the upper and lower first and second fixed leading edges, 25, 26, are supportingly welded to each other by horizontal bars 21, with the second leading edge 26, being welded to the fixed third panel 24. These bars extend at both the front and rear faces of the spreading device 100 to act as a protection for the hydrofoil bodies.

The first and second hydrofoils 22, 23, have pivot round bar handles 35 extending between sockets (not shown) in the respective frames. The first and second hydrofoils have inner and outer panel plates 40, 41, which are curved to provide the panels with hydrodynamically induced lateral force.

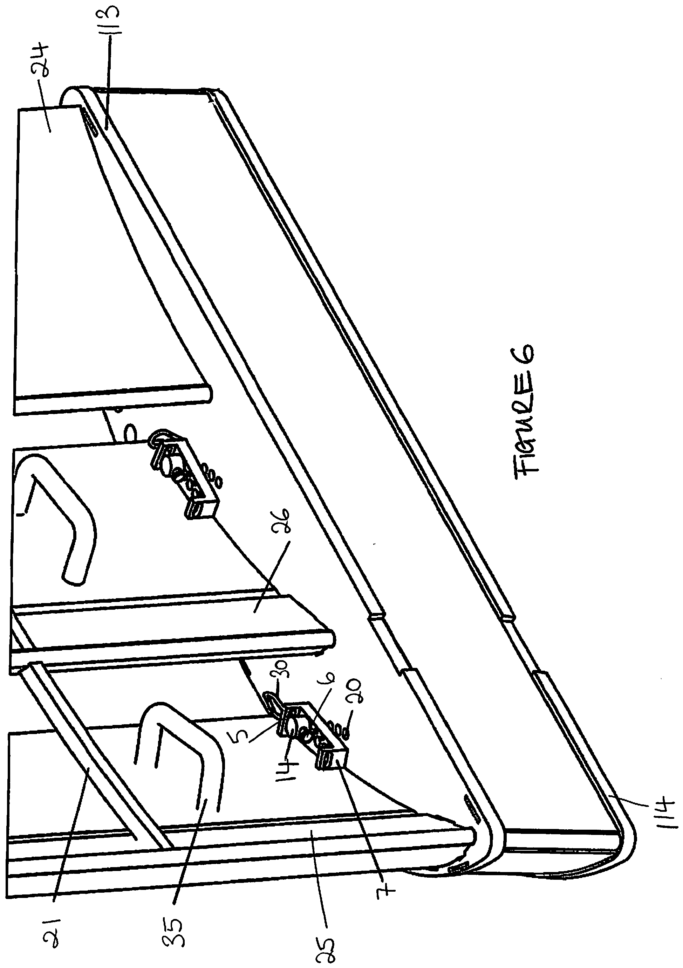

For pivotal adjustment of the hydrofoils 22, 23, as shown Figure 6, the intermediate frame 113 with apertures 20 on its top face, with the same number of apertures mirrored on the bottom face of the frame 114. The apertures are arranged in such a way so as to provide fine adjustments in the angle of attachment of the hydrofoils, namely between 0 and 12°, increasing in increments of 2°. That is to say, whilst they are arranged in front of their panels, each overlaps its neighbours in a direction away from its panel when pinned thereto, whilst successively deviating from the panel.

By adjusting the position of the first and second hydrofoils, 22, 23, the volume of water passing through the spreading device 100 is controlled, and as a result, so is the force exerted on the hydrofoils. This allows the device's position in the water to be altered, either vertically or horizontally.

A lug 7 is attached to the base of first and second upper hydrofoils by a bolt 14 that extends through it, passing through the chosen aperture in the intermediate frame 13 to hold the lug in place. A pin 6 passes through the head of the bolt 14 and subsequently through an aperture 5 in the side of the lug, thus restricting rotation of the bolt. A carabiner 30 passes through a slot in the end of the pin 6 to hold it in place.

The spreading device 100 has a slight inward facing curvature wherein the upper and lower frames extend in opposite directions from the intermediate frame 113.

There are a pair of apertured wings 37 extending inwards from the upper and lower faces of the intermediate frame 113. A threaded screw 40 extends through the apertures on both of the wings 37, to be secured in place by a nut 38 on the underside of the bottom wing. The screw 40 passes through four ears 36 on a plate 29, the plate itself having four separate apertures 31 onto which the towing cables will attach. The ears 36 and the intermediate frame 113 being separably supported by individual hollow tubes 220. The plate can be rotated about the screw to adjust its radial position, thus altering the attachment position of the towing cables.

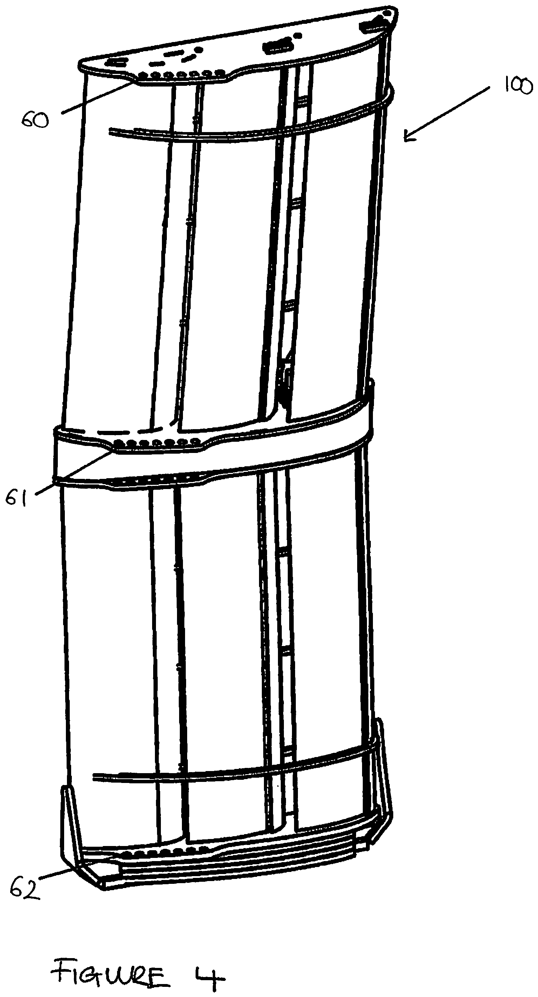

The outer face of the spreading device 100 is shown in Figure 4, and includes an outer protruding rim on the upper, intermediate and lower frames, 111, 113 and 112 respectively, each of them having a number of apertures 60, 61 and 62 respectively, onto which the fishing trawl will directly connect.

The upper first and second hydrofoil bodies, 22 and 23 respectively, have a handle 35 each in order to aid the user to physically adjust the position of the hydrofoils.

The invention is not intended to be restricted to the details of the above described embodiment. Alternatively, the bolts 14 could be held in place using an alternative locking mechanism such as a linchpin or split pin that is directly attached to the bolt, rather than through a pin 6.

Furthermore, the bolts 14 could have a threaded end such that upon passing through the aperture, they can be locked in place with a nut.

It can be envisaged that any other suitable locking mechanism could be used instead of a bolt, pin and R-clip.

## Claims

1. A spreading device (100) for trawl fishing and seismic survey operations, the device (100) comprising:
• an upper (111), an intermediate (113) and a lower frame (112);
• at least two upper panels (22,23,24) between the upper (111) and intermediate frames (113);
• at least two lower panels (22,23,24) between the intermediate (113) and lower frames (112);
• one of the upper panels (22,23) and one of the lower panels (22,23) being adjustable in its angle of attack with respect to other panels; and
• manual means (20) for adjusting the angle of attack of the adjustable panels (22,23) wherein the manual adjustment means (20) is provided on at least one of the frames (111, 112, 113), said spreading device being **characterized in that** the manual adjustment means (20) is provided by a set of apertures (20) on a movable panel (22,23) and a set of apertures (20) on at least one of the frames (111, 112,113), the apertures (20) being capable of alignment upon movement of the moveable panel (22,23).

2. A spreading device as claimed in claim 1 , wherein at least one of the panels is fixed.

3. A spreading device as claimed in claim 1, or claim 2, wherein the adjustable panels are pivoted about their leading edge.

4. A spreading device as claimed in claim 3, wherein the adjustable panels are pivoted about an intermediate axis between respective frames.

5. A spreading device as claimed in claim 3 or claim 4, wherein the adjustable panels are pivoted about their trailing edge.

6. A spreading device as claimed in any preceding claim, wherein fixed members are provided close to the leading edges.

7. A spreading device as claimed in claim 6, wherein the fixed members are hydrodynamically shaped in the cross-section.

8. A spreading device as claimed in claim 1, wherein the manual adjustment means is provided on the top face of the intermediate frame.

9. A spreading device as claimed in claim 1 or claim 8, wherein the manual adjustment means is provided on both the top and bottom face of the intermediate frame.

10. A spreading device as claimed in claim 1, wherein the apertures are adapted to receive a pin.

11. A spreading device as claimed in claim 1 or claim 10, wherein the apertures are aligned opposite obliquely with respect to the local orientation of the adjustable panel.

12. A spreading device as claimed in claim 1, claim 10, wherein the apertures are arranged in the direction of adjustment.

## Patentansprüche

1. Verbreitungsvorrichtung (100) für Schleppnetzfischerei und seismische Untersuchungsvorgänge, wobei die Vorrichtung (100) Folgendes umfasst:
• einen oberen (111), einen mittleren (113) und einen unteren Rahmen (112);
• mindestens zwei obere Platten (22, 23, 24) zwischen dem oberen (111) und mittleren Rahmen (113);
• mindestens zwei untere Platten (22, 23, 24) zwischen dem mittleren (113) und dem unteren Rahmen (112);
• wobei eine der oberen Platten (22, 23) und eine der unteren Platten (22, 23) in ihrem Anstellwinkel in Bezug auf andere Platten einstellbar ist; und
• eine manuelle Einrichtung (20) zum Einstellen des Anstellwinkels der einstellbaren Platten (22, 23), wobei die manuelle Einstelleinrichtung (20) an mindestens einem der Rahmen (111, 112, 113) bereitgestellt ist, wobei die Verbreitungsvorrichtung **dadurch gekennzeichnet ist, dass** die manuelle Einstelleinrichtung (20) durch einen Satz von Öffnungen (20) an einer beweglichen Platte (22, 23) und einen Satz von Öffnungen (20) an mindestens einem der Rahmen (111, 112, 113) bereitgestellt ist, wobei die Öffnungen (20), bei Bewegung der beweglichen Platte (22, 23) zur Ausrichtung in der Lage sind.

2. Verbreitungsvorrichtung nach Anspruch 1, wobei mindestens eine der Platten feststehend ist.

3. Verbreitungsvorrichtung nach Anspruch 1 oder Anspruch 2, wobei die einstellbaren Platten um ihre Vorderkante geschwenkt werden.

4. Verbreitungsvorrichtung nach Anspruch 3, wobei die einstellbaren Platten um eine Zwischenachse zwischen jeweiligen Rahmen geschwenkt werden.

5. Verbreitungsvorrichtung nach Anspruch 3 oder Anspruch 4, wobei die einstellbaren Platten um ihre Hinterkante geschwenkt werden.

6. Verbreitungsvorrichtung nach einem der vorhergehenden Ansprüche, wobei feststehende Elemente nahe den Vorderkanten bereitgestellt sind.

7. Verbreitungsvorrichtung nach Anspruch 6, wobei die feststehenden Elemente im Querschnitt hydrodynamisch geformt sind.

8. Verbreitungsvorrichtung nach Anspruch 1, wobei die manuelle Einstelleinrichtung an der Oberseite des mittleren Rahmens bereitgestellt ist.

9. Verbreitungsvorrichtung nach Anspruch 1 oder Anspruch 8, wobei die manuelle Einstelleinrichtung sowohl an der Oberseite als auch der Unterseite des mittleren Rahmens bereitgestellt ist.

10. Verbreitungsvorrichtung nach Anspruch 1, wobei die Öffnungen ausgelegt sind, um einen Stift aufzunehmen.

11. Verbreitungsvorrichtung nach Anspruch 1 oder Anspruch 10, wobei die Öffnungen in Bezug auf die örtliche Lage der einstellbaren Platte schräg gegenüberliegend ausgerichtet sind.

12. Verbreitungsvorrichtung nach einem der Ansprüche 1 bis 10, wobei die Öffnungen in der Einstellrichtung angeordnet sind.

## Revendications

1. Dispositif d'étalement (100) pour la pêche au chalut et des opérations de prospection sismique, le dispositif (100) comprenant :
• un cadre supérieur (111), un cadre intermédiaire (113) et un cadre inférieur (112) ;
• au moins deux panneaux supérieurs (22, 23, 24) entre les cadres supérieur (111) et intermédiaire (113) ;
• au moins deux panneaux inférieurs (22, 23, 24) entre les cadres intermédiaire (113) et inférieur (112) ;
• l'un des panneaux supérieurs (22,23) et l'un des panneaux inférieurs (22,23) pouvant être réglés au niveau de leur angle d'attaque par rapport aux autres panneaux ; et
• un moyen manuel (20) permettant de régler l'angle d'attaque des panneaux (22, 23) réglables, dans lequel le moyen de réglage manuel (20) est prévu sur au moins l'un des cadres (111, 112, 113), ledit dispositif d'étalement étant **caractérisé en ce que** le moyen de réglage manuel (20) est prévu par un ensemble d'ouvertures (20) sur un panneau (22, 23) mobile et un ensemble d'ouvertures (20) sur au moins l'un des cadres (111, 112, 113), les ouvertures (20) étant capables de s'aligner lors du mouvement du panneau (22, 23) mobile.

2. Dispositif d'étalement selon la revendication 1, dans lequel au moins un des panneaux est fixe.

3. Dispositif d'étalement selon la revendication 1 ou la revendication 2, dans lequel les panneaux réglables pivotent autour de leur bord d'attaque.

4. Dispositif d'étalement selon la revendication 3, dans lequel les panneaux réglables pivotent autour d'un axe intermédiaire entre des cadres respectifs.

5. Dispositif d'étalement selon la revendication 3 ou la revendication 4, dans lequel les panneaux réglables pivotent autour de leur bord de fuite.

6. Dispositif d'étalement selon une quelconque revendication précédente, dans lequel des éléments fixes sont prévus à proximité des bords d'attaque.

7. Dispositif d'étalement selon la revendication 6, dans lequel les éléments fixes sont formés de manière hydrodynamique dans la section transversale.

8. Dispositif d'étalement selon la revendication 1, dans lequel le moyen de réglage manuel est prévu sur la face supérieure du cadre intermédiaire.

9. Dispositif d'étalement selon la revendication 1 ou la revendication 8, dans lequel le moyen de réglage manuel est prévu à la fois sur la face supérieure et inférieure du cadre intermédiaire.

10. Dispositif d'étalement selon la revendication 1, dans lequel les ouvertures sont adaptées pour recevoir une broche.

11. Dispositif d'étalement selon la revendication 1 ou la revendication 10, dans lequel les ouvertures sont alignées de manière oblique et opposée par rapport à l'orientation locale du panneau réglable.

12. Dispositif d'étalement selon la revendication 1 ou la revendication 10, dans lequel les ouvertures sont disposées dans la direction de réglage.
